# EUROPÄISCHE PATENTANMELDUNG

(11) **EP 1 637 210 A1**
(43) Veröffentlichungstag der Anmeldung: **22.03.2006**
(21) Anmeldenummer: 05017819.3
(22) Anmeldetag: 17.08.2005
(51) Int. Cl.: B01D 53/14, C07C 217/28

(54) **Verfahren zur Reinigung von Gasen und dazu geeignete Absorptionsflüssigkeit**

(30) Priorität: 02.09.2004 DE 102004042418
(71) Anmelder: Clariant Produkte (Deutschland) GmbH, 65929 Frankfurt am Main (DE)
(72) Erfinder: Streitberger, Horst, 85403 Altötting (DE); Pfüller, Oliver, Dr., 65843 Sulzbach (DE); Stankowiak, Achim, Dr., 84503 Altötting (DE); Snell, Alexander, Dr., 84503 Altötting (DE); Mollekopf, Norbert, Prof. Dr.-Ing., 01309 Dresden (DE); Müller, Hans-Dieter, Dr., 01259 Dresden (DE)

(57) **Zusammenfassung**

Gegenstand der Erfindung ist die Verwendung einer Absorptionsflüssigkeit zur Reinigung von Gasen von gasförmigen, sauren Verunreinigungen, wobei die Absorptionsflüssigkeit
A) 0,1 bis 100 Gew.-% eines oder mehrerer Amine der Formel 1 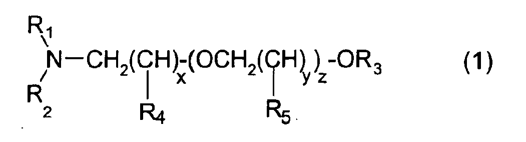 worin
   - R₁: H, C₁-C₆-Alkyl, einen aromatischen Rest mit 6 bis 18 Kohlenstoffatomen oder einen Rest der Formel 2 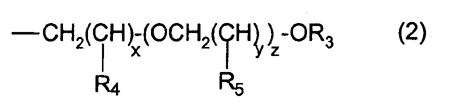
   - R₂: H, C₁-C₆-Alkyl, einen aromatischen Rest mit 6 bis 18 Kohlenstoffatomen oder einen Rest der Formel 3 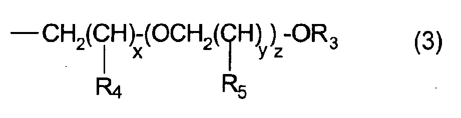
   - R₃: C₁-C₆-Alkyl oder einen aromatischen Rest mit 6 bis 18 Kohlenstoffatomen
   - R₄: H oder CH₃
   - R₅: H oder CH₃
   - x: eine Zahl von 0 bis 3
   - y: eine Zahl von 0 bis 3
   - z: eine ganze Zahl zwischen 1 und 30 bedeuten,
   sowie gegebenenfalls
B) 0 bis 99,9 Gew.-% Wasser,
   und/oder
C) 0 bis 99,9 Gew.-% eines beliebigen Lösungsmittels enthält.

## Beschreibung

Die vorliegende Erfindung betrifft die Verwendung von Polyalkylenglykoletheraminen als Haupt- oder Nebenbestandteil von Absorptionsflüssigkeiten zur Entfernung von verunreinigenden Komponenten aus Gasgemischen beliebiger Herkunft (kurz Rohgase genannt).

In der Energietechnik und in der chemischen Industrie werden Gasgemische verschiedensten Ursprungs wie Erdgas oder Synthesegas zur Erzeugung von Heizgasen und zur Herstellung chemischer Produkte eingesetzt. Die in ihnen enthaltenen, säurebildenden Verunreinigungen wie CO₂, HCl, HCN, H₂S, SO₂, COS, CS₂, niedere Mercaptane und Thioether sind zum Teil toxisch und umweltschädigend, oder sie verhindern durch Feststoffausfall oder Vergiftung des Katalysators den Produktionsablauf. Sie müssen daher aus dem Rohgas abgetrennt werden. Die Anlagenbetreiber sind gesetzlich gehalten, behördliche Bestimmungen zu beachten, die den Schwefelausstoß und die Emission anderer giftiger Bestandteile begrenzen, und gegenwärtig gewinnt auch die Reduktion des Kohlendioxidausstoßes eine immer größere Bedeutung.

Das verbreitetste Reinigungsverfahren beruht auf der Absorption, bei der die gute Löslichkeit der verunreinigenden Komponenten in bestimmten Flüssigkeiten (Waschmitteln) zur Auswaschung genutzt wird, während die schwerlöslichen Nutzgase im Gasstrom verbleiben. Die technische Durchführung des Absorptionsprozesses geschieht in einer Gaswäsche. Ihr prinzipieller Aufbau wird durch die Wiederverwendung des Waschmittels durch Regenerierung bestimmt, indem das Waschmittel in einem Kreislauf so geführt wird, dass in dem eigentlichen Absorber die Beladung mit den auszuwaschenden Gasen und im Desorber die Austreibung der gelösten Gase erfolgen. Die Desorption beruht auf der Abnahme der Löslichkeit mit steigender Temperatur oder, wenn die chemischen Umwandlungen nur teilweise erfolgen, mit abnehmendem Partialdruck durch Druckentspannung oder Strippen. Im Stand der Technik sind Verfahren zur Entfernung solcher Verunreinigungen ausführlich beschrieben, z.B. in A. L. Kohl, F. C. Riesenfeld: "Gas Purification", 4^{th} ed., Gulf Publishing Co., Houston/Texas (1985) und S. A. Newman (Editor): "Acid and Sour Gas Treating Processes", Gulf Publishing Co., Houston/Texas (1997).

Zur Entfernung der abzutrennenden Gase werden sowohl physikalische als auch chemische Waschverfahren sowie Hybridverfahren eingesetzt. Diese Einteilung erfolgt nach den physikalisch-chemischen Prinzipien, die der Anwendung zu Grunde liegen. Die Absorption beruht darauf, dass die Komponenten des aus einem flüssigen und einem gasförmigen Gemisch bestehenden Systems eine Verteilung in den beiden Phasen anstreben, die dem thermodynamischen Gleichgewichtszustand entspricht.

Bei den physikalischen Absorptionsverfahren werden auf Grund unterschiedlicher spezifischer physikalischer zwischenmolekularer Wechselwirkungen bevorzugt einzelne Gaskomponenten aus den Gasgemischen ausgewaschen. Charakteristisch für die physikalische Löslichkeit ist, dass bei wachsendem Druck bzw. Partialdruck und konstant gehaltener Temperatur für jedes Einzelgas eine spezifische, angenähert gleichmäßige Zunahme der gelösten Menge erfolgt. Die Löslichkeit der absorbierten Komponenten nimmt mit der Temperatur ab.

Als physikalisch wirkende Absorptionsmittel werden bei den bekannten Verfahren neben anderen beispielsweise tiefgekühltes Methanol, N-Methylpyrrolidon, Propylencarbonat, 1,3-Dimethylpropylenharnstoff und Polyethylenglykoldialkylether eingesetzt. In EP-B-0 033 401 sowie EP-A-0 124 835 sind darüber hinaus Verfahren unter Verwendung von N-alkylierten Diaminen beschrieben. DE 195 48 009 A1 beschreibt ein physikalisch wirkendes Waschmittel auf Basis eines Oligo-Diamins.

Bei der chemischen Absorption reagiert das gelöste Gas gemäß Massenwirkungsgesetz teilweise bis fast vollständig mit dem Lösungsmittel oder mit einer Komponente eines Lösungsmittelgemisches, und es wird zu einem oder mehreren schwerflüchtigen Stoffen umgesetzt, die in der flüssigen Phase verbleiben.

Die häufigste Anwendung findet die chemische Absorption bei der Lösung von säurebildenden Gasen in Wasser, dem zur wirksamen Erhöhung der Dissoziation der schwach sauer reagierenden Elektrolyte basische Zuschlagstoffe hinzugefügt werden. Der Lösungsvorgang beruht darauf, dass die Elektrolyte, also die gelösten sauren Gase und die hinzugefügten basischen Zuschlagstoffe, teilweise bis fast vollständig in Ionen dissoziieren, wobei die Ionen mit dem Wasser eine so starke Wechselwirkung haben, dass sie die flüssige Phase nicht verlassen können. Als Zuschlagstoff werden bei den bekannten Verfahren neben anderen beispielsweise Pottasche (K₂CO₃), Alkanolamine wie Mono-, Di- oder Triethanolamin, Methyldiethanolamin und Diisopropanolamin, oder Natriumhydroxid eingesetzt. Der Basengehalt in diesen Waschlösungen liegt üblicherweise zwischen 15 bis 60 Gew.-%.

Die tertiäre Alkanolamine enthaltenden wässrigen Lösungsmittel bilden den Übergang zu den kombinierten bzw. hybriden Absorptionsmitteln, bei denen der physikalische Löslichkeitsanteil eines basischen Lösungsmittels durch Mischen mit einem physikalischen Lösungsmittel erhöht wird, wobei sich gleichzeitig der chemische Anteil verringert, beispielsweise in Mischungen von Wasser, Diethanolamin und Methanol (Amisol® ). Die wesentlichen Merkmale der hybriden Absorptionsmittel sind die im unteren Partialdruckbereich stärkere und die danach mit wachsendem Partialdruck merkliche Zunahme der Löslichkeit. So können beispielsweise durch die Anwesenheit rein physikalisch wirkender Absorptionsmittelkomponenten im Hybridwaschmittel auch organische Schwefelverbindungen ausgewaschen werden, was mit rein chemischen Absorptionen nur bedingt möglich ist.

Die Löslichkeitscharakteristiken bestimmen den Anwendungsbereich für die verschiedenen Waschverfahren.

Physikalische Wäschen werden bei hohen Prozessdrücken und hohen Konzentrationen der abzutrennenden Gaskomponenten eingesetzt. Die Regenerierung des Waschmittels lässt sich durch eine Absenkung des Partialdruckes, d.h. durch Entspannung oder Strippen, oder durch Erhitzen vornehmen. Man strebt auf dem Wege der physikalischen Absorption keinen hohen Reinheitsgrad des gewaschenen Gasstromes an, weil die Erfüllung dieser Forderung einen hohen Aufwand zur Regenerierung des Waschmittels durch Desorption stellen würde. Zur Feinreinigung lässt sich bei ungeändertem Betriebsdruck eine chemische Wäsche anschließen.

Chemische Wäschen werden bei niedrigen Prozessdrücken oder bei niedrigen Konzentrationen eingesetzt. Der Reinigungsgrad in den chemischen Wäschen ist höher als in den physikalischen. Zur Regenerierung des beladenen Wachmittels lässt sich nur die Desorption durch "Auskochen" auf die in schwachen Basen gelösten schwach sauren Gase (CO₂, H₂S, Mercaptane) anwenden. Im Falle einer stärkeren Base oder eines stärker basisch reagierenden Gases (SO₂) wird die Löslichkeitsgrenze für die lonenkonzentration überschritten und das ausfallende Salz ausgeschleust. Das gesättigte Waschmittel wird in den Absorptionsprozess zurückgeführt, indem es in den unbeladenen zuzuführenden Waschmittelstrom, der die Verluste an Wasser durch Kristallwasser und Ausschleusung und die verbrauchte aktive chemischen Komponente ersetzt, eingeleitet wird.

In den Hybridwäschen sind die Vorteile der physikalischen und der chemischen Wäsche kombiniert, so dass die Desorption auch mit der Erniedrigung des Partialdruckes durch Druckentspannung oder Strippen vorgenommen werden kann; eine zweite Stufe zur Feinreinigung erübrigt sich. Als weitere Vorteile sind zu nennen: Durch die Anwesenheit rein physikalisch wirkender Absorptionsmittelkomponenten werden auch organische Schwefelverbindungen ausgewaschen, was mit rein chemischer Absorption nur bedingt möglich ist, und die im Desorptionsprozess anfallende Wasserdampfmenge ist geringer als bei der chemischen Absorption. Dadurch sind Apparate- und Energieaufwand bei Hybridwäschen geringer.

Von diesem Gedanken ausgehend stellt sich die Aufgabe für die vorliegende Erfindung, nach geeigneten Waschflüssigkeiten zu suchen, die im reinen Zustand eine gute physikalische Löslichkeit für die sauren Gase besitzen und die in der Lösung in Wasser eine ausreichende chemische Löslichkeit entwickeln, so dass die wirksame resultierende Löslichkeit der Waschflüssigkeit in bestimmten Mischungsbereichen höher als in den gebräuchlichen kombinierten Lösungsmittelgemischen ist, und ein ausreichender Zuwachs der Löslichkeit in einem großen Partialdruckbereich gewährleistet ist. Gleichzeitig muss das Waschmittel die von der Technik geforderten Anforderungen - hohe spezifische Löslichkeit und hohe Selektivität der auszuwaschenden Komponente gegenüber den anderen Gasbestandteilen, niedriger Dampfdruck, leichte Regenerierbarkeit, chemische Beständigkeit gegenüber allen Rohgaskomponenten und gegenüber Sauerstoff, thermische Stabilität, niedrige Beschaffungskosten, ständige Verfügbarkeit - im Sinne einer wirtschaftlich und ökonomischen optimalen Lösung erfüllen. Aufgabe der vorliegenden Erfindung war es, ein Waschmittel zu entwickeln, das den Anforderungen weithingehend genügt und das geeignet ist, durch Verwendung kleinerer Apparate und durch geringeren Energieaufwand die Investitions- und Betriebskosten zu senken.

Gegenstand der Erfindung ist die Verwendung einer Absorptionsflüssigkeit zur Reinigung von Gasen von gasförmigen, sauren Verunreinigungen, wobei die Absorptionsflüssigkeit
A) 0,1 bis 100 Gew.-% eines oder mehrerer Amine der Formel 1 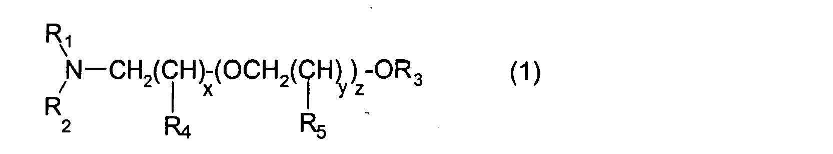 worin
   - R₁: H, C₁-C₆-Alkyl, einen aromatischen Rest mit 6 bis 18 Kohlenstoffatomen oder einen Rest der Formel 2 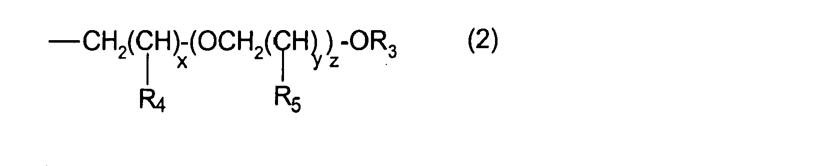
   - R₂: H, C₁-C₆-Alkyl, einen aromatischen Rest mit 6 bis 18 Kohlenstoffatomen oder einen Rest der Formel 3 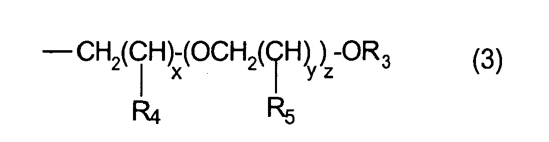
   - R₃: C₁-C₆-Alkyl oder einen aromatischen Rest mit 6 bis 18 Kohlenstoffatomen
   - R₄: H oder CH₃
   - R₅: H oder CH₃
   - x: eine Zahl von 0 bis 3
   - y: eine Zahl von 0 bis 3
   - z: eine ganze Zahl zwischen 1 und 30 bedeuten,
   sowie gegebenenfalls
B) 0 bis 99,9 Gew.-% Wasser,
   und/oder
C) 0 bis 99,9 Gew.-% eines beliebigen Lösungsmittels enthält.

Die Absorptionsflüssigkeit enthält ein oder mehrere Polyalkylenglykolamine. In einer bevorzugten Ausführungsform der Erfindung steht R₁ für -CH₂CH₂-(OCH₂CH₂)ₙ-OR₃. In einer weiteren bevorzugten Ausführungsform der Erfindung steht R₂ für H. In einer weiteren bevorzugten Ausführungsform der Erfindung steht R₃ für Methyl. In einer weiteren bevorzugten Ausführungsform der Erfindung steht x für 1. In einer weiteren bevorzugten Ausführungsform der Erfindung steht y für 1. In einer weiteren bevorzugten Ausführungsform der Erfindung steht z für eine Zahl zwischen 1 und 4. Die erfindungsgemäßen Absorptionsflüssigkeiten können nicht nur als Einzelkomponenten, sondern auch in Gemischen in beliebigen Mischungsverhältnissen eingesetzt werden.

In einer weiteren bevorzugten Ausführungsform der Erfindung werden die erfindungsgemäßen Polyalkylenglykoletheramine zusammen mit Lösungsmitteln verwendet. Bevorzugt als Lösemittel sind solche, in denen sich die Komponente A zu mind. 0,1 Gew.-% löst, die mit der Komponente A chemisch nicht reagieren, und die eine CO₂-Löslichkeit von CO₂ von mindestens 1,0 Nm³ pro m³ Lösungsmittel bei einem Partialdruck von 1 bar und bei 20°C aufweisen.

Solche Lösungsmittel sind beispielsweise Alkohole, besonders bevorzugt Methanol; Pyrrolidone, besonders bevorzugt N-Methylpyrrolidon, N-Ethylpyrrolidon, N-Propylpyrrolidon und weitere Pyrrolidone mit einem C₁ bis C₁₂ Alkylrest am Stickstoff; Propylencarbonat; 1,3-Dimethylpropylenharnstoff; N-Formylmorpholin; Schwefelheterocyclen, besonders bevorzugt Sulfolan; Alkanolamine mit mind. einem Alkylrest C₁ bis C₆ und mind. einem C₁ bis C₆-Alkanolrest, besonders bevorzugt N,N-Diethylethanolamin, N, N-Dimethylethanolamin, N-Methyldiethanolamin, N-Methylethanolamin; Amine mit mind. einem C₁ bis C₆-Alkanolrest, besonders bevorzugt Monoethanolamin, Diethanolamin, Triethanolamin, Diisopropanolamin; Hydroxyaminoethylether, Mono- und Diglykolamine; Diamine mit einer Alkylgruppe zwischen den Stickstoffatomen und Allyl- und/oder Hydroxyalkylresten, besonders bevorzugt N,N',N'-(Trimethyl)-N-(2-hydroxyethyl)ethylendiamin, N,N,N',N'-Tetramethylethylendiamin; oder Polyethylenglykoldialkylether. In einer weiteren bevorzugten Ausführungsform der Erfindung liegt der Anteil der Amine der Formel 1 bei 5 bis 99 Gew.-%, insbesondere bei 75 bis 98 Gew.-%. Wasser, das bei der Hybridwäsche zugegen ist, liegt vorzugsweise in Mengen bis 15 Gew.-%, insbesondere von 1 bis 12 Gew.-%, speziell 2 bis 10 Gew.-% vor. Der Anteil der Lösungsmittel liegt vorzugsweise bei 1 bis 95 Gew.-%, insbesondere bei 2 bis 25 Gew.-%.

In einer weiteren bevorzugten Ausführungsform addieren sich die Bestandteile A und C zu 100 Gew.-%. In einer weiteren bevorzugten Ausführungsform addieren sich die Bestandteile A, B und C zu 100 Gew.-%.

Bei den zu reinigenden Gasen kann es sich um beliebige Gase handeln, die entsprechende Verunreinigungen enthalten, und die selbst mit der Absorptionsflüssigkeit nicht reagieren. Besonders geeignet ist die Absorptionsflüssigkeit für die Reinigung von Synthesegas. Die Verunreinigungen, die durch die erfindungsgemäße Verwendung zu entfernen sind, sind säurebildend und gas- oder dampfförmig. Es handelt sich insbesondere um CO₂, H₂S, SO₂, CS₂, HCN, COS oder niedere Mercaptane mit C₁-C₈-Kohlenstoffresten.

Die Gaswäsche kann drucklos oder unter Drücken zwischen 1 bis 110 bar, vorzugsweise bis 70 bar, durchgeführt werden. Die Absorptionstemperatur kann bei 0 bis 100°C liegen, bevorzugt bei 10 bis 40°C. Der in den Rohgasen enthaltene Wasserdampf wird bei einer Wäsche mit dem erfindungsgemäßen Absorptionsflüssigkeiten ebenfalls mitentfernt, so dass eine vorhergehende Entwässerung des Rohgases nicht notwendig ist. Die Desorption von Wasserdampf ist in der Regenerierungsphase entsprechend vorzunehmen. Wie bei physikalischen Wäschen üblich, sollen die erfindungsgemäßen, beladenen Absorptionsflüssigkeiten möglichst wenig Wasser enthalten, vorzugsweise zwischen 0 und 15 Mol-%, da mit steigendem Wassergehalt die Löslichkeiten der Gase abnehmen. Für die Hydrolyse von COS und CS₂ unter Einsatz eines Hydrolysepromotors ist ein Wasseranteil von wenigstens 0,5 Mol-% notwendig.

Ein weiterer Gegenstand der Erfindung ist ein Verfahren zur Reinigung von Gasen, indem man die Gase bei Temperaturen von 0 bis 100°C und Drücken von 1 bis 110 bar mit der erfindungsgemäßen Absorptionsflüssigkeit in Kontakt bringt.

### Beispiele:

Die Wirksamkeit der erfindungsgemäßen Absorptionsflüssigkeit wird im Folgenden anhand von Versuchen, die an einer Pilotanlage durchgeführt wurden, dargestellt.

Die im erfindungsgemäßen Lösungsmittel experimentell bestimmten Löslichkeitswerte von CO₂ zeigen, dass dieses Lösungsmittel ein sehr gutes Lösungsvermögen besitzt, wie der Vergleich mit Polyethylenglykoldimethylether offenbart: In Polyethylenglykoldimethylether (Molmasse von ca. 250 g/mol, Handelsbezeichnung ® Genosorb 1753) bei 20°C 3,42 Nm³_{CO2} m⁻³_{Lm}·bar⁻¹_{CO2}, im erfindungsgemäßen Lösungsmittel bei 20°C 15,2 Nm³_{CO2}·m⁻³_{Lm}·bar⁻¹_{CO2}.

Auf der Grundlage von CO₂-Löslichkeitsmessungen in dem erfindungsgemäßen, wasserfreien Lösungsmittel und in dessen wässriger 7 mol-%igen bzw. 50 gew.-%igen Lösung lässt sich abschätzen, dass das hybride Löslichkeitsverhalten des Lösungsmittelgemisches bei 45 bis 60 Mol % bzw. 92 bis 95 Gew.-% Amingehalt liegt.

### Versuche zur Absorption von CO₂:

Ein in einer Vergasungsanlage erzeugtes Syntheserohgas (kurz Rohgas) wurde bei einem Druck von 50 bar und einer Temperatur von ca. 30°C in den Sumpf der Absorptionskolonne geführt.

Das Rohgas besaß folgende Zusammensetzung:

| | | |
|---|---|---|
| CO₂ | Vol.-% | 35,5 |
| H₂ | Vol.-% | 56,5 |
| CO | Vol.-% | 8,0 |

Es wurden drei Versuche mit gleich gehaltenen Randbedingungen durchgeführt, die zu verschiedenen Zeitpunkten mit verschiedenen Absorbentien gefahren wurden. Das Ziel der Versuche war, zu zeigen, dass bei Verwendung der erfindungsgemäßen Absorptionsflüssigkeit deren Umlaufmenge im Vergleich zum Stand der Technik reduziert werden kann.

### Versuch 1 (Vergleichsbeispiel)

Es erfolgt der Einsatz eines Polyethylenglykoldimethylethers (kurz: PEGDME) einer Molmasse von ca. 250 (Handelsbezeichnung ® Genosorb 1753).

### Versuch 2 (erfindungsgemäßes Beispiel)

Es erfolgt der Einsatz eines Bis(methyldiethylenglykolether)amin-Wassergemisches mit 85 Gew.-% Amin und 15 Gew.-% Wasser analog zu Versuch 1.

### Versuch 3 (erfindungsgemäßes Beispiel)

Es erfolgt der Einsatz von Bis(methyldiethylenglykolether)amin analog zu Versuch 1.

Als gleich gehaltene Randbedingungen wurden folgende Größen festgelegt:
1. Rohgasmenge
2. Rohgaszusammensetzung
3. CO₂-Gehalt im Reingas
4. Temperatur des Rohgases am Absorbereintritt (32°C)
5. Temperatur des regenerierten Lösungsmittels am Absorberzulauf (17°C)
6. Strippdampfverhältnis der thermischen Regeneration

Als Zielgröße der jeweiligen Versuchseinstellung wird der Umlauf der Absorptionsflüssigkeit erfasst.

### Die Versuchsergebnisse:

Nachfolgende Zahlen basieren auf statistischen Daten, die jeweils während einer längeren Versuchseinstellung (mindestens 8 Stunden) aus Online-Messwerten ermittelt wurden:

| | | Versuch 1 | Versuch 2 | Versuch 3 |
|---|---|---|---|---|
| Rohgas | Nm³/h | 1000 | 1000 | 1000 |
| CO₂ im Rohgas | Vol.-% | 35,5 | 35,5 | 35,5 |
| CO₂ im Reingas | Vol.-% | < 1 | < 1 | < 1 |
| Lösungsmittelmenge | m³/h | 60,3 | 34,6 | 27,1 |

Die erfindungsgemäße Absorptionsflüssigkeit erlaubt unter diesen Bedingungen eine Verringerung der Flüssigkeitsmenge um 42 % (Versuch 2) bzw. um 55 %
(Versuch 3).

### Versuche zur Absorption von H₂S:

Ein in einer Vergasungsanlage erzeugtes Rohgas wurde unter einem Druck von 24 bar und einer Temperatur von ca. 30°C in den Sumpf der Absorptionskolonne geführt.

Das Rohgas besaß folgende Zusammensetzung:

| | | |
|---|---|---|
| H₂S | Vol.-ppm | 480 |
| CO₂ | Vol.-% | 20,7 |
| CH₄ | Vol.-% | 5,6 |
| H₂ | Vol.-% | 40,7 |
| CO | Vol.-% | 33,0 |

Der H₂S-Gehalt konnte über eine Dosierstation eingestellt werden.

Es wurden drei Versuche mit gleich gehaltenen Randbedingungen durchgeführt, die zu verschiedenen Zeitpunkten mit verschiedenen Absorbentien gefahren wurden.

### Versuch 4 (Vergleichsbeispiel)

Es erfolgt der Einsatz eines Polyethylenglykoldimethylethers (kurz: PEGDME) einer Molmasse von ca. 250 (Handelsbezeichnung ® Genosorb 1753).

### Versuch 5 (erfindungsgemäßes Beispiel)

Es erfolgt der Einsatz eines Bis(methyldiethylenglykolether)amin-Wassergemisches mit 85 Gew.-% Amin und 15 Gew.-% Wasser analog zu Versuch 4.

### Versuch 6 (erfindungsgemäßes Beispiel)

Es erfolgt der Einsatz von Bis(methyldiethylenglykolether)amin analog zu Versuch 4.

### Versuchsergebnisse:

Nachfolgende Zahlen basieren auf statistischen Daten, die jeweils während einer längeren Versuchseinstellung (mindestens 8 Stunden) aus Online-Messwerten ermittelt wurden:

| | | Versuch 4 | Versuch 5 | Versuch 6 |
|---|---|---|---|---|
| Rohgas | Nm³/h | 370 | 370 | 370 |
| H₂S im Rohgas | Vol.-ppm | 480 | 480 | 480 |
| H₂S im Reingas | Vol.-ppm | < 10 | < 10 | < 10 |
| Lösungsmittelmenge | m³/h | 4,4 | 3,4 | 2,8 |

Die erfindungsgemäße Absorptionsflüssigkeit erlaubt unter diesen Bedingungen eine Verringerung der Flüssigkeitsmenge um 23 % (Versuch 5) bzw. um 36 %
(Versuch 6).

## Patentansprüche

1. Verwendung einer Absorptionsflüssigkeit zur Reinigung von Gasen von gasförmigen, sauren Verunreinigungen, wobei die Absorptionsflüssigkeit
A) 0,1 bis 100 Gew.-% eines oder mehrerer Amine der Formel 1 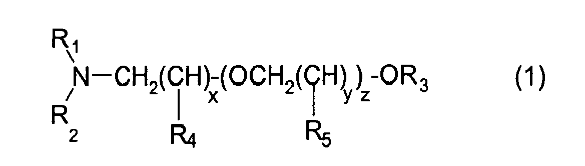 worin
R₁ H, C₁-C₆-Alkyl, einen aromatischen Rest mit 6 bis 18 Kohlenstoffatomen oder einen Rest der Formel 2 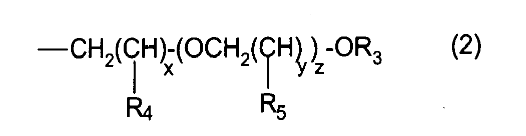
R₂ H, C₁-C₆-Alkyl, einen aromatischen Rest mit 6 bis 18 Kohlenstoffatomen oder einen Rest der Formel 3 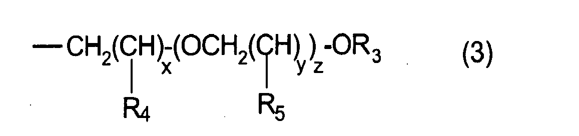
R₃ C₁-C₆-Alkyl oder einen aromatischen Rest mit 6 bis 18 Kohlenstoffatomen
R₄ H oder CH₃
R₅ H oder CH₃
x eine Zahl von 0 bis 3
y eine Zahl von 0 bis 3
z eine ganze Zahl zwischen 1 und 30 bedeuten,
sowie gegebenenfalls
B) 0 bis 99,9 Gew.-% Wasser,
und/oder
C) 0 bis 99,9 Gew.-% eines beliebigen Lösungsmittels enthält.

2. Verwendung nach Anspruch 1, worin die Bestandteile A, B und C sich zu 100 Gew.-% addieren.

3. Verwendung nach Anspruch 1 und/oder 2, worin R₁ für -CH₂-CH₂-(O-CH₂-CH₂)-OR₃ steht.

4. Verwendung nach einem oder mehreren der Ansprüche 1 bis 3, worin R₂ für H steht.

5. Verwendung nach einem oder mehreren der Ansprüche 1 bis 4, worin R₃ für Methyl steht.

6. Verwendung nach einem oder mehreren der Ansprüche 1 bis 5, worin x = 1 ist.

7. Verwendung nach einem oder mehreren der Ansprüche 1 bis 6, worin y = 1 ist.

8. Verwendung nach einem oder mehreren der Ansprüche 1 bis 7, worin z eine ganze Zahl zwischen 1 und 4 ist.

9. Verwendung nach einem oder mehreren der Ansprüche 1 bis 8 für die Wäsche von Synthesegas.

10. Verfahren zum Reinigen von Gasen bei einem Druck von 1 bis 110 bar und einer Temperatur von 0 bis 100°C, worin als Absorptionsflüssigkeit ein Stoffgemisch wie in einem oder mehreren der Ansprüche 1 bis 9 definiert zur Anwendung kommt.

11. Zusammensetzung, enthaltend
A) 0,1 bis 100 Gew.-% eines oder mehrere Amine der Formel 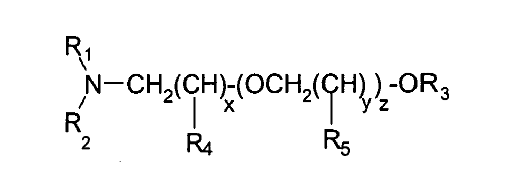 worin
R₁ H, C₁-C₆-Alkyl oder einen aromatischen Rest mit 6 bis 18 Kohlenstoffatomen 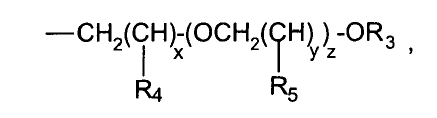
R₂ H, C₁-C₆-Alkyl oder einen aromatischen Rest mit 6 bis 18 Kohlenstoffatomen 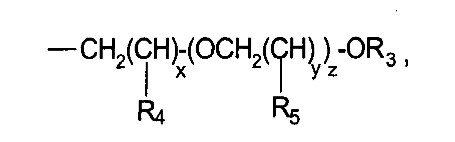
R₃ C₁-C₆-Alkyl oder einen aromatischen Rest mit 6 bis 18 Kohlenstoffatomen
R₄ H oder CH₃
R₅ H oder CH₃
x eine Zahl von 0 bis 3
y eine Zahl von 0 bis 3
z eine ganze Zahl zwischen 1 und 30
sowie
B) 0,0 bis 99,9 Gew.-% Wasser,
und
C) 0,0 bis 99,9 Gew.-% eines beliebigen Lösungsmittels enthält.
